# EUROPÄISCHE PATENTSCHRIFT

(11) **EP 0 516 646 B1**
(45) Veröffentlichungstag und Bekanntmachung des Hinweises auf die Patenterteilung: **03.11.1993**
(21) Anmeldenummer: 91903406.6
(22) Anmeldetag: 16.02.1991
(51) Int. Cl.: A61J 3/00, A23G 3/26, B01J 2/00

(54) **VORRICHTUNG ZUR FILMLACKIERUNG UND/ODER ZUCKERLACKIERUNG**
DEVICE FOR FILM-COATING AND/OR SUGAR-COATING
DISPOSITIF D'ENDUCTION AVEC UNE PELLICULE ET/OU AVEC DU SUCRE

(30) Priorität: 20.02.1990 DE 4005207
(43) Veröffentlichungstag der Anmeldung: 09.12.1992
(73) Patentinhaber: GEBRÜDER LÖDIGE MASCHINENBAU GMBH, D-33050 Paderborn (DE)
(72) Erfinder: LÜCKE, Roland, D-4790 Paderborn (DE)
(74) Vertreter: KOHLER SCHMID + PARTNER
(86) Internationale Anmeldenummer: DE9100127
(87) Internationale Veröffentlichungsnummer: WO9112789

(56) Entgegenhaltungen:
- EP-A- 85 650
- EP-A- 137 151
- EP-A- 382 160
- EP-A-13 248 0
- DE-B- 2 938 795
- FR-A-15 910 77
- US-A- 3 834 347
- US-A- 4 844 001

## Beschreibung

Die Erfindung geht aus von einer Vorrichtung zur Filmlackierung und/oder Zuckerlackierung von Überzugsgut, mit einer von einem Gehäuse umschlossenen rotierbaren Trommel, die an der Trommelöffnung Anbauten aufweist, welche über an der Vorrichtung vorgesehene Hilfseinrichtungen von der Trommel weg verlagerbar sind, wobei die Anbauten die Stirnwand des Gehäuses der Vorrichtung umfassen.

Eine derartige Vorrichtung ist durch die Druckschrift FR-A-15 91 0474 bekannt geworden.

Bei der bekannten Vorrichtung ist eine erste drehbare Trommel geneigt in einer zweiten ortsfesten Trommel koaxial gelagert. In der ersten Trommel wird das Produkt behandelt. Die zweite Trommel ist über einen verschwenkbaren Deckel verschließbar. Über den Deckel wird nur die erste Trommel produktdicht verschlossen.

Eine weitere Vorrichtung ist durch den Prospekt WD 11.182 SM/HICO-d 32.2000 mit der Bezeichnung "Hi-Coater, das moderne und wirtschaftliche System für Tablettencoating" bekanntgeworden.

Um Anforderungen im pharmazeutischen Bereich gerecht zu werden, werden Umhüllungsmaschinen meist aus hochwertigen korrosionsbeständigen Materialien gebaut. Sie sollten gut zugänglich sein, damit die Maschine bei einem Verfahrens- oder Produktwechsel leicht zu reinigen und umzurüsten ist.

Die bekannte Maschine aus WD 11.182 SM/HICO-d 32.2000 weist im Außenbereich große ebene Flächen auf und die Oberfläche selbst ist metallisch poliert. Die Kanten sind abgerundet und Flächenübergänge sind nahezu ansatzlos ohne wesentliche Vorsprünge oder Vertiefungen ausgebildet. Diese konstruktiven Vorkehrungen sind ausreichend, damit sich keine Stäube in schwer zugänglichen Stellen der Maschine absetzen oder in die Maschine eindringen können. Derartige Umbauungen der rotierenden Trommel haben aber den Nachteil, daß die Trommel selbst und ihre Übergangsbereiche zu angrenzenden Maschinenteilen schlecht einzusehen und auf Ablagerungen zu überprüfen sind. Ist es ferner noch notwendig, Teile wie Dichtungen oder sonstige Verschleißteile im Gehäuse auszuwechseln, so ist die Demontage der Maschine aufwendig.

Der Erfindung liegt daher die Aufgabe zugrunde, eine Vorrichtung der eingangs genannten Art dahingehend weiterzubilden, daß die Reinigungs-, Umrüst- und Wartungsarbeiten an und in der Maschine erleichtert werden.

Diese Aufgabe wird erfindungsgemäß dadurch gelöst, daß im oberen Teil des die Trommel umgebenden ortsfesten Gehäuseteils Führungselemente linear verschiebbar gelagert sind, die mit der Stirnwand fest verbunden sind, wodurch die Stirnwand von dem ortsfesten Gehäuseteil weg verfahrbar ist.

Die erfindungsgemäße Vorrichtung hat damit den wesentlichen Vorteil, daß Verblendungen, Schutzvorrichtungen und für besondere Verfahren im Frontbereich an der Maschine befestigte Hilfsaggregate von der Trommelöffnung schnell und einfach abzukoppeln sind, ohne daß damit wesentliche handwerkliche Tätigkeiten notwendig wären. Können Reinigungsarbeiten unmittelbar an der Trommel durchgeführt werden, so ist dies nicht nur eine Erleichterung für das Arbeitspersonal, sondern es ist sehr viel sicherer gewährleistet, daß die Reinigungsarbeiten ausreichend sind, weil eine Überprüfung der mit dem Produkt in Berührung kommenden Teile sehr viel einfacher möglich ist.

Nach der Erfindung umfassen die Anbauten die Stirnwand des Gehäuses der Vorrichtung, wobei die Stirnwand zu einem die Trommel umgebenden ortsfesten Gehäuseteil linear verfahrbar ist.

Dies hat den Vorteil, daß das Bedienungspersonal an der Trommel direkt arbeiten kann und hinzu kommt noch, daß Dichtungselemente und Einbauten, die auch bei nicht bewegbarer Stirnwand notwendig und vorhanden sind, leichter zugänglich werden.

Unter bewegbarer Stirnwand ist hier zu verstehen, daß die Stirnwand von der Trommel linear weg verfahrbar ist.

Im oberen Teil des Gehäuseteils sind Führungselemente linear verschiebbar gelagert, die mit der Stirnwand fest verbunden sind.

Dies hat den Vorteil, daß die Stirnwand von der Trommel weg verfahren werden kann, ohne daß im Begehungsbereich der Maschine Führungs- oder Halteelemente angebracht sein müssen. Frei von konstruktiven Ausgestaltungen entsteht ein Raum, in dem das Bedienungs- und Wartungspersonal an der Maschine arbeiten kann.

Sind zwischen der Stirnwand und dem Gehäuseteil Dichtungselemente vorgesehen, so können diese bei verfahrener Stirnwand leicht ausgetauscht werden. Dichtungselemente können im eingebauten Zustand gesamthaft auf Fehler überprüft und begutachtet werden. Dies ermöglicht auch im Störfall eine schnelle Lokalisation der Störung. Sollten Stäube wider Erwarten doch in das Maschinengehäuse eintreten bzw. aus der Trommel in das Maschinengehäuse ausströmen, so kann das schadhafte Maschinenteil schnell ausgewechselt werden und die kontaminierten Teile sind gut zu reinigen, weil sie unmittelbar und ohne Behinderung durch andere Bauteile zugänglich sind.

In weiterer Ausgestaltung der Erfindung verschließt ein Dichtungselement den Spalt zwischen rotierender Trommelflanschstirnfläche und der feststehenden Stirnwand gasdicht.

Dies hat den Vorteil, daß im Unterdruckbetrieb keine Atmosphärenluft unkontrolliert in die Trommel einströmen kann. Für die Optimierung eines Produktionsverfahrens ist es besonders wichtig, daß dieses Dichtungselement nicht schadhaft ist. Das Dichtungselement überbrückt den Spalt zwischen einem bewegten und einem stehenden Teil gasdicht. Wird die Stirnwand verfahren, so ist dieses Dichtungselement in Gänze leicht einzusehen und kann geprüft werden.

In weiterer Ausgestaltung der Erfindung weist die Stirnwand Gasführungskanäle auf, die an Gasführungskanäle des Gehäuseteils gasdicht ankoppelbar sind.

Mit dieser konstruktiven Ausgestaltung ist es möglich, die Stirnwand von dem Gehäuseteil auf eine einfache Art und Weise abzukoppeln. Die Gasführung kann dennoch von der Beschickungsöffnung ausgehend in den Trommelinnenraum erfolgen. Die Dichtungselemente im Bereich der Ankopplung der Führungselemente sind übersichtlich angeordnet und können jederzeit auf Funktionstüchtigkeit überprüft werden.

In bevorzugter Ausgestaltung der Erfindung umfassen die Anbauten eine Sprühvorrichtung, wobei die Sprühvorrichtung aus der Trommel heraus verfahrbar und/oder verschwenkbar ist.

Dies hat den Vorteil, daß die Sprühvorrichtung unabhängig von der Stirnwand aus dem Frontbereich der erfindungsgemäßen Vorrichtung bewegt werden kann. Die Vorrichtung ist auch dann für Wartungs-, Reinigungs- und Umbauarbeiten besser zugänglich, wenn die Stirnwand nicht verfahren wird und fest mit dem Gehäuseteil verbunden bleibt. Ferner kann die Sprühvorrichtung in einer festgelegten Position umgerüstet werden. Dies erleichtert auch die Einstellung der Düsen, da ja die verschwenkte Position bekannt ist und bei den Einstellungsarbeiten berücksichtigt werden kann.

In einer weiteren Ausbildung der Erfindung weist die Sprühvorrichtung einen ersten und zweiten Tragarmabschnitt auf, wobei an dem ersten Tragarmabschnitt ein Sprühdüsenträger drehbar befestigt ist und der zweite Tragarmabschnitt im Seitenbereich des Gehäuseteils verfahrbar und/oder verschwenkbar geführt ist.

Dies hat den Vorteil, daß für die Befestigung der Sprühvorrichtung an der Stirnwand oder in der Beschickungsöffnung keine Halterungen mehr vorzusehen sind. Der Aufbau der Vorrichtung kann übersichtlicher gehalten werden, wobei nunmehr glatte, ebene Flächen im Beschickungs- und Frontbereich einfacher sauber zu halten sind. Das Eigengewicht des Sprühdüsenträgers nehmen die Tragarmabschnitte auf. Der Sprühdüsenträger kann in jeder Arbeitsphase auf dem ersten Tragarmabschnitt montiert bleiben. Der Sprühdüsenträger ist auf dem ersten Tragarmabschnitt auch verdrehbar gelagert. Dies ist beim Anfahren der Maschine (verschiedene Verfahrensschritte) vorteilhaft, denn mit unterschiedlicher Drehzahl der Trommel ändert sich auch die Lage des Gutbetts. Durch ein Verdrehen des Sprühdüsenträgers in einem Winkelbereich von 30° kann der Sprühstrahl dem Produktverhalten auch bei laufender Maschine angepaßt werden.

In einer weiteren Ausbildung der Erfindung ist zwischen dem ersten Tragarmabschnitt und dem zweiten Tragarmabschnitt ein mittlerer Tragarmabschnitt ausgebildet, der Zuführungsleitungen von einem Verteiler zum Sprühdüsenträger aufnimmt.

Dies ist dann besonders vorteilhaft, wenn mehrere Leitungen dem Sprühdüsenträger zugeführt werden. Die Übersichtlichkeit im Frontbereich der Vorrichtung bleibt gewahrt, ein pharmagerechteres Arbeiten ist möglich.

Die erfindungsgemäße Vorrichtung zur Filmlackierung und/oder Zuckerlackierung entspricht damit allen erweiterten Anforderungen, die im pharmazeutischen Bereich gestellt werden. Die Vorrichtung ist leicht zu bedienen, zu warten und zu säubern. Sie ist in vielen Bereichen leicht zugänglich und ist dennoch nach außen wie nach innen gasdicht wirksam verschließbar. Die neue Sprühvorrichtung läßt ein leichteres und exakteres Arbeiten zu. Daten der Düseneinstellung können Steuerungs- und Dokumentationsprogrammen zugänglich gemacht werden.

Weitere Vorteile ergeben sich aus der Beschreibung der beigefügten Zeichnung. Ebenso können die vorstehend genannten und die noch weiter genannten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen in der Zeichnung näher erläutert. Es zeigen:
- Fig. 1: eine erfindungsgemäße Vorrichtung zum Filmlackieren und/oder Zuckerdragieren mit einer aus der Vorrichtung ausgefahrenen Sprühvorrichtung;
- Fig. 2: eine erfindungsgemäße Vorrichtung zum Filmlackieren und/oder Zuckerdragieren, mit einer zu einem Gehäuseteil beabstandeten Stirnwand und herausverfahrener und verschwenkter Sprühvorrichtung;
- Fig. 3: einen Teilausschnitt einer Stirnwand und der um eine Achse rotierenden Trommel in Seitenansicht;
- Fig. 3a: einen sichelförmig ausgebildeten Spalt zur gerichteten Gasführung;
- Fig. 4: einen schematischen Aufbau einer erfindungsgemäßen Vorrichtung zum Filmlackieren und/oder Zuckerdragieren; und
- Fig. 5: einen schematischen Aufbau der Gasführung in einer Stirnwand mit einem exzentrisch ausgebildeten Ringspalt.

Die einzelnen Figuren der Zeichnung zeigen den erfindungsgemäßen Gegenstandteilweise stark schematisiert und sind nicht maßstäblich zu verstehen. Die Gegenstände der einzelnen Figuren sind teilweise stark verkleinert bzw. vergrößert dargestellt, damit ihr Aufbau besser gezeigt werden kann.

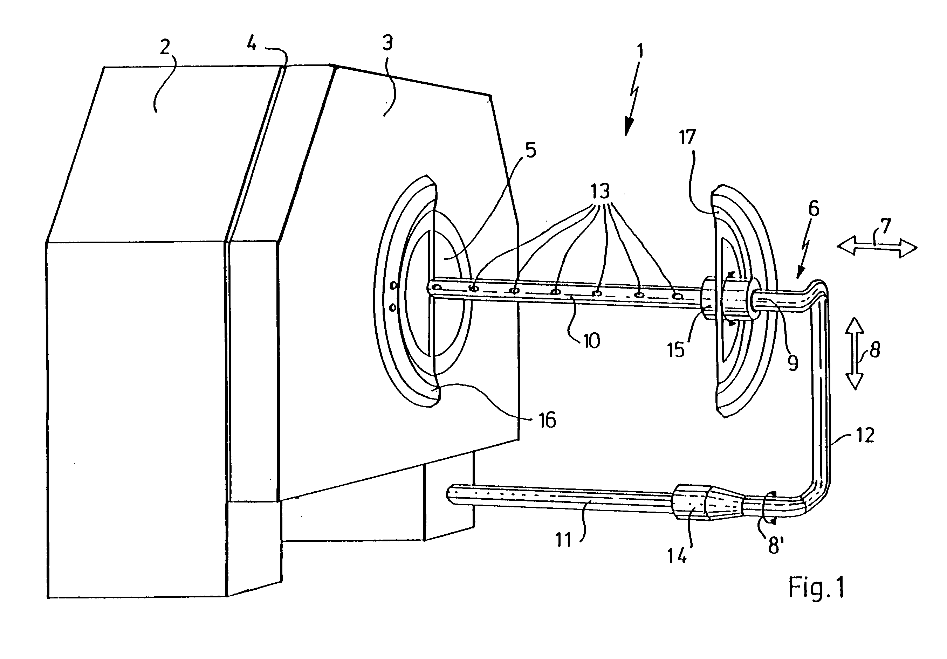

In Fig. 1 ist mit 1 eine Vorrichtung zum Filmlackieren und Zuckerdragieren gezeigt, deren Gehäuse sich aus einem Gehäuseteil 2 und einer Stirnwand 3 zusammensetzt. In dem Gehäuseteil 2 sind unter anderem eine drehbar gehaltene Trommel und die dazu notwendigen Antriebe untergebracht. Die Stirnwand 3 ist zu dem Gehäuseteil 2 verfahrbar und ist in Anlage an dem Gehäuseteil 2 über ein umlaufendes Dichtungselement 4 gegenüber dem Gehäuseteil 2 abgedichtet. In der Stirnwand 3 ist eine Beschikkungsöffnung 5 vorgesehen, die unmittelbar im die Trommelöffnung der rotierenden Trommel mündet. Zwischen der Beschickungsöffnung 5 und der Trommelflanschstirnwand ist ein Dichtungselement vorgesehen, das die rotierende Trommel gegenüber der ortsfesten Beschickungsöffnung 5 abdichtet. Über die Beschickungsöffnung 5 kann eine Sprühvorrichtung 6 in den Innenraum der Trommel verfahren werden. Die Sprühvorrichtung 6 ist in Pfeilrichtungen 7 verfahrbar, in Pfeilrichtungen 8 absenk- bzw. anhebbar, und in Pfeilrichtung 8' verschwenkbar.

Die Sprühvorrichtung 6 weist einen ersten Tragarmabschnitt 9 auf, der einen Sprühdüsenträger 10 drehbar gelagert hält und einen zweiten Tragarmabschnitt 11, der als verfahrbare und verschwenkbare Führungsschiene ausgebildet ist. Über den zweiten Tragarmabschnitt 11 ist die Sprühvorrichtung 6 im Gehäuseteil 2 gehalten. Zwischen dem ersten Tragarmabschnitt 9 und dem zweiten Tragarmabschnitt 11 ist ein mittlerer Tragarmabschnitt 12 ausgebildet, der Leitungen zum Sprühdüsenträger 10 führt. An dem Sprühdüsenträger 10 sind mit 13 Düsen bekannter Art angedeutet. Die Düsen 13 sind mit Leitungen verbunden, die im ersten Tragarmabschnitt 9 und in dem mittleren Tragarmabschnitt 12 geführt sind und in Anschlüsse eines Verteilers 14 münden. An den Verteiler 14 können flüssigkeits- und/oder gasführende Leitungen angeschlossen werden, über die den Düsen 13 die zu versprühenden Flüssigkeiten und/oder Gase zugeführt werden. Werden beispielsweise Zweistoffdüsen als Düsen 13 verwendet, kann das Gas im ersten, zweiten und mittleren Tragarmabschnitt 9, 11, 12 geführt sein und die flüssigkeitsführenden Leitungen sind an den Sprühdüsenträger 10 von außen ankoppelbar. Der Sprühdüsenträger 10 ist über einen Griff 15 in einem Winkelbereich von ca. 30° verdrehbar. An der Stirnwand 3 ist eine erste Klappe 16 vorgesehen, über die gemeinsam mit einer zweiten Klappe 17 die Beschickungsöffnung 5 verschließbar ist. Die zweite Klappe 17 ist im Ausführungsbeispiel der Fig. 1 an der Sprühvorrichtung 6 befestigt.

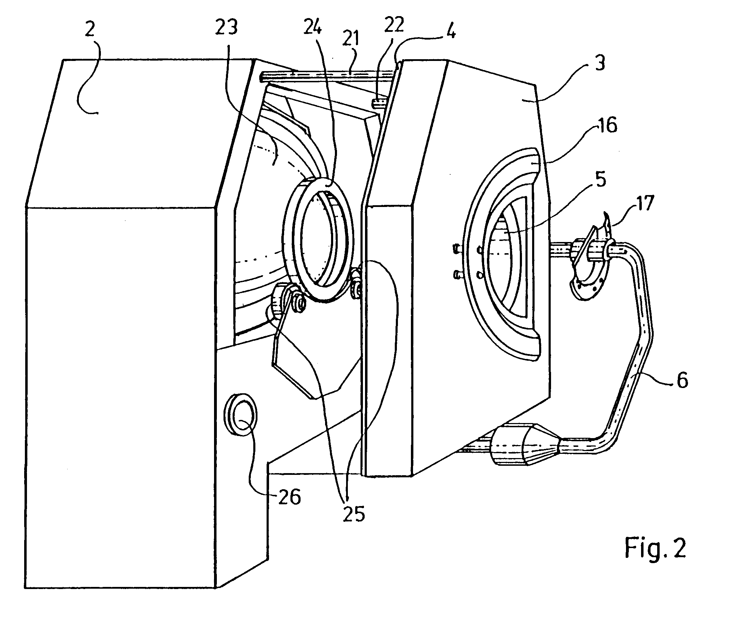

Fig. 2 zeigt eine Vorrichtung zum Filmlackieren und Zuckerdragieren gemäß Fig. 1, bei der die Stirnwand 3 vom Gehäuseteil 2 beabstandet gezeigt ist. Die Stirnwand 3 wird von Führungselementen 21, 22 gehalten. Die Führungselemente 21, 22 sind mit der Stirnwand 3 fest verbunden. Im Gehäuseteil 2 sind die Führungselemente 21, 22 verfahrbar gelagert. Über das Dichtungselement 4 ist die Stirnwand 3 gegenüber dem Gehäuseteil 2 abdichtbar. In dem Gehäuseteil 2 ist eine Trommel 23 drehbar gelagert. Die Trommelöffnung ist als Trommelflansch 24 ausgebildet, der mit seiner äußeren Umfangsfläche auf Laufrollen 25 aufliegt.

Die Trommel 23 ist an der Rückseite so ausgebildet, daß sie über einen Antrieb antreibbar ist. Die Drehzahl der rotierenden Trommel 23 ist stufenlos änderbar; auch die Laufrichtung der Trommel 23 kann gewählt werden. In bekannter Weise ist an der Trommel 23 eine in der Figur nicht gezeigte Produktauslaßöffnung vorgesehen, über die das umhüllte Gut aus der Trommel 23 in bereitzustellende Behälter nach unten entleert werden kann.

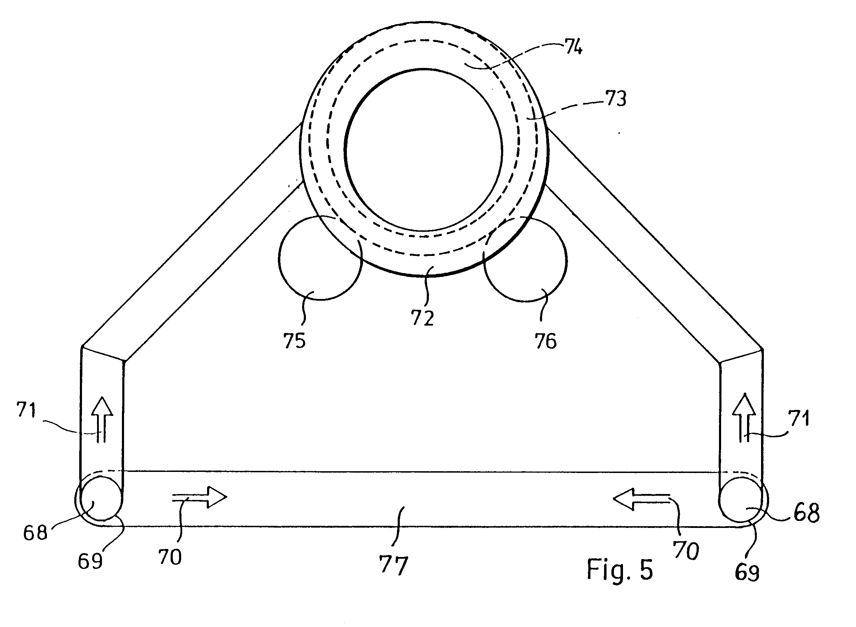

In dem Gehäuseteil 2 ist seitlich ein Gasführungskanal 26 geführt, der an Gasführungskanäle der Stirnwand 3 gasdicht ankoppelbar ist. Über die Gasführungskanäle wird das Gas in den Innenraum der Trommel 23 geführt (siehe Fig. 5).

In der Fig. 2 ist die Sprühvorrichtung 6 in einer Weise an der Vorrichtung verfahren und verschwenkt, daß die Stirnwand 3 über die Führungselemente 21, 22 von dem Gehäuseteil 2 weg verfahren werden kann. Ein freier Raum entsteht zwischen der Stirnwandinnenseite und der Gehäuseteilvorderfront. An der Frontseite der Stirnwand 3 sind die ersten und zweiten Klappen 16 und 17 teilweise geöffnet bzw. verschwenkt. Die zweite Klappe 17 wird mit der Sprühvorrichtung 6 verschwenkt, d.h. wird die Sprühvorrichtung 6 aus dem Trommelinnenraum herausgefahren, so wird auch die zweite Klappe 17 von der Beschickungsöffnung 5 weg verfahren.

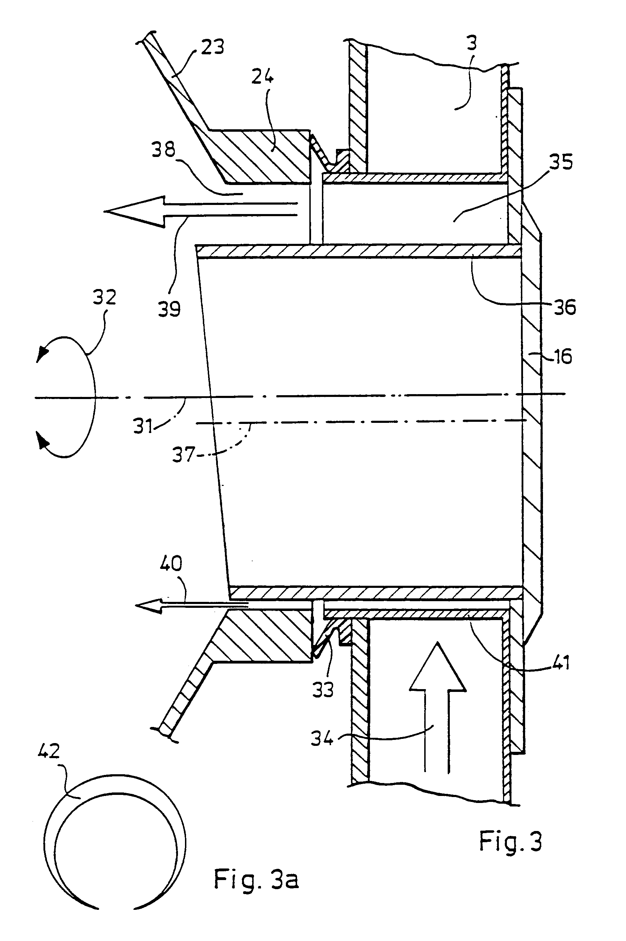

Fig. 3 zeigt in Seitenansicht einen Ausschnitt mit Teilen der Stirnwand 3 und der Trommel 23. Die Trommel 23 rotiert um eine Achse 31, und mit Pfeil 32 ist in der Figur gezeigt, daß die Rotationsrichtung der Trommel 23 frei wählbar ist. An die Stirnfläche des Trommelflansches 24 drückt sich ein Dichtring 33 der Stirnwand 3. Mit dem Dichtring 33 wird ein Spalt zwischen der Trommel 23 und der Stirnwand 3 gasdicht verschlossen. Im Betrieb rotiert die Stirnfläche der Trommel 23 und der Dichtring 33 ist ortsfest angeordnet. Gas wird aus dem Gehäuseteil der Vorrichtung kommend der Stirnwand 3 zugeführt. Das Gas strömt in Pfeilrichtung 34 in einen Ringspalt 35 der Stirnwand 3. Zur ersten Klappe 16 hin ist der Ringspalt 35 gasdicht verschlossen. Das in den Ringspalt 35 einströmende Gas wird über den Umfang des Ringspaltes 35 gleichmäßig verteilt und kann über eine zum Trommelflansch 24 hinweisende Öffnung in das Innere der Trommel 23 strömen. Die Vorrichtung wird so betrieben, daß im Innern der Trommel 23 gegenüber dem Atmosphärendruck immer ein geringerer Druck herrscht. Der Unterdruck in der Trommel 23 wird aufgebaut, indem stetig mehr Gas aus der Trommel abgezogen als dieser zugeführt wird. Der Ringspalt 35 wird nach innen von der Mantelfläche eines Rohrabschnitts 36 begrenzt, dessen Achse 37 zur Achse 31 der Trommel 23 versetzt ist. In der Seitenansicht der Fig. 3 wird deutlich, daß dadurch im oberen Bereich der Trommelöffnung 38 ein größerer Spalt ausgebildet ist als im unteren Bereich der Trommelöffnung 38. Strömt nun Gas in den Ringspalt 35, so strömt es in Pfeilrichtung 39 und Pfeilrichtung 40 in den Innenraum der Trommel 23. Das Gas wird sich aufgrund der unterschiedlichen Spaltweiten bevorzugt im oberen Bereich der Trommel 23 ausbreiten. Durch den Rohrabschnitt 36 wird der Gasstrom in Richtung Innenraum der Trommel 23 ausgerichtet und er umhüllt die Achse 32 mit einer unterschiedlich starken Gasschicht. Die Anordnung des Rohrabschnitts 36 ist in der Figur beispielhaft zu verstehen. Seine seitliche Ausdehnung in Richtung Trommel kann an der Stirnwand enden und auch die Beabstandung der Achse 37 von der Achse 31 kann so gewählt sein, daß beispielsweise kein Spalt mehr im unteren Teil der Trommelöffnung 38 ausgebildet ist und der Ringspalt 35 unterbrochen ist. Liegt in einer derartigen Ausbildung der Rohrabschnitt auf einer Fläche 41 der Stirnwand auf, so kann sich ein gasführender Spalt ausbilden, wie er in der Fig. 3a gezeigt ist. Im unteren Bereich wird dem Innenraum der Trommel dann kein gerichteter Gasstrom zugeführt.

Fig. 3a zeigt einen sichelförmig ausgebildeten Spalt, durch den der Trommel das Gas zuströmt. In dem Spalt 42 wird die Gasströmung gerichtet und in einer Anstellung in den Trommelinnenraum geblasen, die gewährleistet, daß bei einem gleichzeitig stattfindenden Sprühvorgang der Sprühstrahl nicht negativ von der Gasströmung beeinflußt wird.

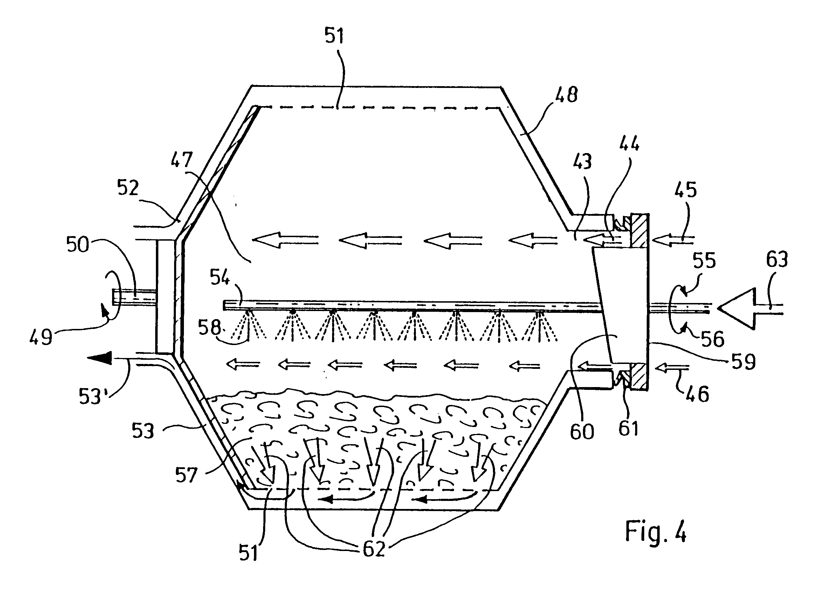

Fig. 4 zeigt stark schematisiert den Aufbau und die Wirkungsweise der erfindungsgemäßen Vorrichtung im Längsschnitt. An der Trommelöffnung 43 ist ein exzentrischer Ringspalt 44 ausgebildet, über den Gas in Pfeilrichtung 45 und 46 in einen Innenraum 47 der Trommel 48 einströmt. Die Trommel 48 dreht sich dabei in Pfeilrichtung 49 um die Achse 50. Am Trommelumfang sind partiell perforierte Segmente 51 vorgesehen, über die der durch den exzentrischen Ringspalt einströmende Gasstrom aus der Trommel 48 abgeführt werden kann. Unterhalb der perforierten Segmente 51 sind Gasabführungskanäle 52, 53 vorgesehen, über die das Gas aus der Trommel 48 abgesaugt wird. Die Gasabführungskanäle 52, 53 sind an der Trommel gasdicht ausgebildet und rotieren mit um die Achse 50. Das Gas wird in Pfeilrichtung 53' abgeführt. Nur wenn sich das perforierte Segment 51 im Bodenbereich befindet, wird Gas über das Segment 51 aus dem Innenraum 47 abgesaugt.

In der Figur ist auch ein Sprühdüsenträger 54 gezeigt, der Teil einer Sprühdüsenvorrichtung ist. Der Sprühdüsenträger 54 ist in einem Bereich von ca. 30° verstellbar, so daß der Sprühdüsenträger 54 in Pfeilrichtungen 55, 56 auf die Lage eines Gutbetts 57 in der Trommel 48 ausgerichtet werden kann. Ein Sprühstrahl von Düsen 58 wird derart auf das Gutbett 57 gerichtet, daß der Sprühstrahl das Gutbett 57 bestmöglich erfassen kann.

Wird bei rotierender Trommel 48 und einströmendem Gas immer mehr Gas aus der Trommel 48 abgezogen als ihr zugeführt wird, so entsteht im Trommelinnenraum ein Unterdruck. Dazu ist die gegenüber der Trommel 48 ortsfest angeordnete Beschickungsöffnung 59 mit einem den exzentrischen Ringspalt 44 bildenden Rohrabschnitt 60 gegenüber der Stirnwand der Trommelöffnung 53 mittels eines Dichtrings 61 abgedichtet.

Aufgrund des exzentrischen Ringspalts 44 wird das in den Innenraum der Trommel 48 einströmende Gas als gerichtete Strömung in die Tiefe der Trommel 48 strömen. Das Gas legt sich im Trommelinneraum mantelförmig um den Sprühdüsenträger 54. Das Gas wird aus der Trommel über die Segmente 51 im Bodenbereich der Trommel 48 abgesaugt, d.h. das Gas wird in einer Zwangsströmung, in der Figur mit Pfeil 62 eingezeichnet, durch das Gutbett 57 geführt. Die von den Düsen 58 versprühte Flüssigkeit, die dem Sprühdüsenträger 54 aus Pfeilrichtung 63 zuströmt, wird in derselben Richtung versprüht, wie das Gas aus der Trommel 48 abgezogen wird. Man bezeichnet deshalb dieses Verfahren als Gleichstromverfahren. Die Versprühung der Flüssigkeit ist dem Gasfluß in der Trommel gleichgerichtet.

Fig. 5 zeigt stark schematisiert die Gasführung in der Stirnwand 3 der Vorrichtung. Über gasdicht aneinanderkoppelbare Stutzen 68 des Gehäuseteils und 69 der Stirnwand sind die Gasführungskanäle des Gehäuseteils und der Stirnwand miteinander verbindbar. In der Stirnwand wird das Gas in Pfeilrichtung 70 und 71 geführt. Das Gas strömt radial in einen Ringraum 72 geführt ein, der zu einer Stirnwand 73 der Trommelöffnung versetzt ist. Die Stirnwand 73 ist in der Figur mit unterbrochenen Linien eingezeichnet. Durch die Anordnung des Ringraumes 72 zur Stirnwand 73 der Trommelöffnung entsteht ein Ringspalt 74, dessen Spaltweite im oberen Bereich größer ist als im unteren. Über den Ringspalt 74 in den Innenraum der Trommel einströmendes Gas wird deshalb bevorzugt in den oberen Bereich der Trommel strömen. In der Figur sind mit 75 und 76 noch Führungsrollen des Trommelöffnungsflansches eingezeichnet.

Die im Randbereich der Stinwand angeordneten Stutzen 69 sind über einen Druckausgleichskanal 77 miteinander verbunden. Über die Stutzen 68 des Gehäusteils in die Stutzen 69 der Stirnwand einströmendes Gas kann sowohl in Pfeilrichtung 70 wie auch in Pfeilrichtung 71 strömen.

## Patentansprüche

1. Vorrichtung zur Filmlackierung und/oder Zuckerlackierung von Überzugsgut, mit einer von einem Gehäuse umschlossenen rotierbaren Trommel (23; 48), die an der Trommelöffnung (38; 43) Anbauten aufweist, welche über an der Vorrichtung vorgesehene Hilfseinrichtungen von der Trommel (23; 48) weg verlagerbar sind, wobei die Anbauten die Stirnwand (3) des Gehäuses der Vorrichtung umfassen, dadurch gekennzeichnet, daß im oberen Teil des die Trommel umgebenden ortsfesten Gehäuseteils (2) Führungselemente (21, 22) linear verschiebbar gelagert sind, die mit der Stirnwand fest verbunden sind, wodurch die Stirnwand (3) von dem ortsfesten Gehäuseteil (2) weg verfahrbar ist.

2. Vorrichtung nach Anspruch 1, dadurch gekennzeichnet, daß zwischen der Stirnwand (3) und dem Gehäuseteil (2) Dichtungselemente (4; 33) vorgesehen sind.

3. Vorrichtung nach Anspruch 2, dadurch gekennzeichnet, daß die Dichtungselemente (4; 33) an der zum Gehäuseteil (2) weisenden Fläche der Stirnwand (3) angebracht sind.

4. Vorrichtung nach Anspruch 2 oder 3, dadurch gekennzeichnet, daß ein Dichtungselement (33) den Spalt zwischen rotierender Trommelflanschstirnfläche und der feststehenden Stirnwand (3) gasdicht verschließt.

5. Vorrichtung nach einem der Ansprüche 1 bis 4, dadurch gekennzeichnet, daß die Stirnwand (3) Gasführungskanäle aufweist, die an Gasführungskanäle des Gehäuseteils (2) gasdicht ankoppelbar sind.

6. Vorrichtung nach einem der Ansprüche 1 bis 5, dadurch gekennzeichnet, daß die Anbauten eine Sprühvorrichtung (6) umfassen, wobei die Sprühvorrichtung (6) aus der Trommel (23; 48) heraus verfahrbar und/oder verschwenkbar ist.

7. Vorrichtung nach Anspruch 6, dadurch gekennzeichnet, daß die Sprühvorrichtung (6) einen ersten und zweiten Tragarmabschnitt aufweist, wobei an dem ersten Tragarmabschnitt (9) ein Sprühdüsenträger (10) drehbar befestigt ist und der zweite Tragarmabschnitt (11) im Seitenbereich des Gehäuseteils (2) verfahrbar und/oder verschwenkbar geführt ist.

8. Vorrichtung nach Anspruch 7, dadurch gekennzeichnet, daß zwischen dem ersten Tragarmabschnitt (9) und dem zweiten Tragarmabschnitt (11) ein mittlerer Tragarmabschnitt (12) ausgebildet ist, der Zuführleitungen von einem Verteiler (14) zum Sprühdüsenträger (10) aufnimmt.

## Claims

1. Apparatus for the film coating and/or sugar-coating of coating material, with a rotatable drum (23; 48) which is surrounded by a housing and comprises attached constructions at the drum opening (38; 43) which can be moved away from the drum (23; 48) via auxiliary means provided on the apparatus, whereby the attached constructions surround the front wall (3) of the apparatus housing, characterised in that guiding elements (21, 22) are disposed in a linearly displaceable manner in the upper part of the stationary housing part (2) which surrounds the drum, the guiding elements (21, 22) being rigidly connected to the front wall, by means of which the front wall (3) can be moved away from the stationary housing part (2).

2. Device according to claim 1, characterised in that sealing elements (4; 33) are provided between the front wall (3) and the housing part (2).

3. Device according to claim 2, characterised in that the sealing elements (4; 33) are disposed on the surface of the front wall (3) facing the housing part (2).

4. Device according to claim 2 or 3, characterised in that a sealing element (33) closes the gap between the rotating front surface of the drum flange and the stationary front wall (3) in a gastight manner.

5. Device according to any one of claims 1 to 4, characterised in that the front wall (3) exhibits gas supply channels which can be coupled to gas supply channels of the housing part (2) in a gastight manner.

6. Device according to one of claims 1 to 5, characterised in that the attached constructions surround a spraying device (6), whereby the spraying device (6) can be moved and/or pivoted out of the drum (23; 48).

7. Device according to claim 6, characterised in that the spraying device (6) comprises a first and second supporting arm section, wherein a spraying nozzle carrier (10) is secured on the first supporting arm section (9) in a rotatable manner and the second supporting arm section (11) is guided such that it can be moved and/or pivoted in the side region of the housing part (2).

8. Device according to claim 7, characterised in that a central supporting arm section (12) is formed between the first supporting arm section (9) and the second supporting arm section (11) which receives supply ducts for the spraying nozzle carrier (10) from a distributor (14).

## Revendications

1. Dispositif pour l'enduction par film et/ou l'enrobage avec du sucre de produits à enrober,avec un tambour rotatif (23, 48) entouré par un boîtier qui présente, à l'ouverture du tambour (38, 43), des éléments annexes qui peuvent être écartés du tambour (23, 48) au moyen de dispositifs auxiliaires prévus dans le dispositif, dans lequel les éléments annexes comprennent la paroi frontale (3) du boîtier du dispositif, caractérisé en ce que, dans la partie supérieure de la partie de boîtier (2) entourant le tambour de manière fixe, des éléments de guidage (21, 22) sont montés avec possibilité de déplacement linéaire et sont assemblés de manière fixe à la paroi frontale, si bien que la paroi frontale (3) peut être écartée de la partie de boîtier (2) qui reste fixe.

2. Dispositif selon la revendication 1, caractérisé en ce que des éléments d'étanchéité (4, 33) sont prévus entre la paroi frontale (3) et la partie de boîtier (2).

3. Dispositif selon la revendication 2, caractérisé en ce que les éléments d'étanchéité (4, 33) sont disposés sur la face de la paroi frontale (3) tournée vers la partie de boîtier (2).

4. Dispositif selon la revendication 2 ou 3, caractérisé en ce qu'un élément d'étanchéité (33) ferme, de manière étanche aux gaz, l'intervalle existant entre la face frontale du flasque du tambour rotatif et la paroi frontale fixe (3).

5. Dispositif selon l'une des revendications 1 a 4,caractérisé en ce que la paroi frontale (3) présente des canaux d'amenée du gaz qui peuvent être accouplés de manière étanche aux gaz aux canaux d'amenée du gaz de la partie de boîtier (2).

6. Dispositif selon l'une des revendications 1 à 5,caractérisé en ce que les éléments annexes comprennent un dispositif de pulvérisation (6) tandis que le dispositif de pulvérisation (6) peut être enlevé du tambour (23, 48) par déplacement et/ou par pivotement.

7. Dispositif selon la revendication 6, caractérisé en ce que le dispositif de pulvérisation (6) comporte une première et une deuxième section de bras de support tandis que, sur la première section de bras de support (9) , un support de tuyères de pulvérisation (10) est fixé avec possibilité de rotation et que la deuxième section de bras de support (11) est guidée,avec possibilité de déplacement et/ou de pivotement, dans la zone latérale de la partie de boîtier (2).

8. Dispositif selon la revendication 7, caractérisé en ce qu'il existe, entre la première section de bras de support (9) et la deuxième section de bras de support (11), une section de bras de support centrale (12) qui reçoit les conduites d'alimentation allant d'un distributeur (14) vers le support de tuyères d'étanchéité (10).
